# EUROPEAN PATENT SPECIFICATION

(11) **EP 3 724 714 B1**
(45) Date of publication and mention of the grant of the patent: **07.05.2025**
(21) Application number: 19775260.3
(22) Date of filing: 04.03.2019
(51) Int. Cl.: G02B 27/01, G02B 27/00, G02B 27/42, G02B 5/18, G02B 6/00, G02F 1/01

(54) **WAVEGUIDE-BASED DISPLAY ELEMENT**
WELLENLEITERBASIERENDE ANZEIGEVORRICHTUNG
DISPOSTIF D'AFFICHAGE A BASE DE GUIDE D'ONDE

(30) Priority: 28.03.2018 FI 20185296
(43) Date of publication of application: 21.10.2020
(73) Proprietor: Dispelix Oy, 02130 Espoo (FI)
(72) Inventor: BLOMSTEDT, Kasimir, 02130 Espoo (FI); VARTIAINEN, Ismo, 02130 Espoo (FI)
(74) Representative: Kirkpatrick
(86) International application number: PCT/FI2019/050172
(87) International publication number: WO 2019/185976

(56) References cited:
- US-A1- 2014 104 665
- US-A1- 2016 231 566
- US-A1- 2017 034 435
- US-A1- 2017 059 879
- US-A1- 2017 139 210
- US-A1- 2018 052 501
- US-A1- 2018 052 501
- US-A1- 2018 074 340
- US-A1- 2018 074 340
- VARTIAINEN I ET AL: "Depolarization of quasi-monochromatic light by thin resonant gratings", OPTICS LETTERS, OPTICAL SOCIETY OF AMERICA, US, vol. 34, no. 11, 1 June 2009 (2009-06-01), pages 1648 - 1650, XP001524477, ISSN: 0146-9592

## Description

### Field of the Invention

The invention relates to waveguide-based display elements. In particular, the invention relates to a waveguide comprising a novel type of diffractive optical element. The invention can be used in modern personal displays, such as Head-mounted displays (HMDs) and head-up displays (HUDs).

### Background of the Invention

HMDs and HUDs can be implemented using waveguides. Light can be coupled to waveguide, redirected therein or coupled out of the waveguide and to a user's eye using diffraction gratings. Exit pupil expansion can be carried out in the waveguide using grating at which the light rays bounce in two dimensions, thus effectively spreading the light field to a larger area. At each location of the grating, light waves having travelled along different paths are summed. Due to manufacturing-related inaccuracies, waves, whose modelled optical path difference is zero, have actually experienced different phase shifts, making the waves partially coherent. In the design of such EPE gratings, for example, one problem relates to computational challenges induced due to the partial incoherence. That is, (almost) fully coherent waves and (almost) fully incoherent waves are relatively easy to sum, but summing of partially coherent waves, whose degree of coherence is even not exactly known, causes problems. These design- and computation-related problems eventually lead to lower-quality waveguide elements and waveguide display devices. Partially coherent waves are of concern particularly when the light source itself is nearly coherent (laser light). US 2018/0074340 A1 discloses a waveguide which can reduce the coherence by configuring the intermediate-component as a Bragg polarization grating that comprises a stack of birefringent layers configured to diffract the light corresponding to the image that is incident thereon into a zero-order beam to reduce a quantity of the interference loops, thereby reducing the extent of the destructive interference that is caused by the interference loops and increase polarization diversity of the light. However, the present application aims to provide a waveguide with different configure that the rays sum incoherently when the rays meet again. US-A1-2018052501 discloses another waveguide display using diffractive elements to introduce a phase difference between recombining paths of same geometrical length.

### Summary of the Invention

It is an aim of the invention to address the abovementioned problem.

The aim is achieved by the invention as defined in the independent claim.

The invention offers significant benefits. Most of all, the invention solves the partial coherence problem at least for some wavelengths and propagation routes in the waveguide and therefore mitigates both coherence-related computational and practical optical quality problems.

The dependent claims are directed to selected embodiments of the invention.

Next, embodiments of the invention and advantages thereof are discussed in more detail with reference to the attached drawings.

### Brief Description of the Drawings

Fig. 1 shows a top view of a two-dimensional waveguide element having a DOE of a waveguide-based display element in accordance with the invention.
Fig. 2 shows a schematic cross-sectional view of a waveguide element.
Fig. 3 illustrates the graph of the phase as a function of the wavenumber together with a linear approximation thereof.
Figs. 4A and 4B show side and top views, respectively, of a microstructure of a single period of a large-period grating.

### Detailed Description of Embodiments

### Definitions

"Phase function" denotes the phase distribution as a function of the wavenumber within a wavelength (wavenumber) range of interest.

"Geometrical optical path length" is herein defined as the distance travelled in waveguide multiplied by real part of the refractive index of the waveguide material for the studied wavelength.

"Physical optical path length" is defined as the slope of the linear approximation to the phase function at the wavelengths of interest. That is, as the ratio between the phase change and the wavenumber difference. We observe that this approximation is used only to simplify the discussion and does not imply that the phase function is or should be linear or nearly so.

The term "incoherent" and "fully incoherent" describes the relationship between two rays whose path length difference exceeds the coherence length in the waveguide material concerned. Specifically, if the slope of the linear approximation to the difference of the phase functions of two rays exceeds the coherence length, these rays are incoherent.

### Description of selected embodiments

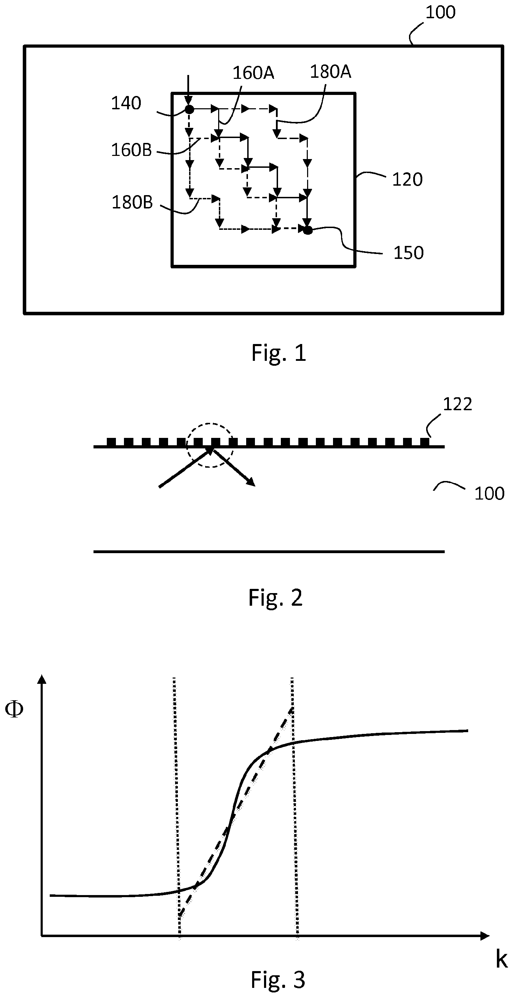

Fig. 1 shows a waveguide element comprising a waveguide 100 capable of guiding light rays in two dimensions via total internal reflections. There is provided on or within the waveguide 100 a DOE 120. The DOE is adapted to spread light rays inside the waveguide along the two dimensions, for example along first and second routes 160A, 160B between a first location 140 and a second location 150 thereof. The routes 160A, 160B have the same geometrical optical path length. Each arrow represents a single "hop" of rays via total internal reflection in the waveguide from the DOE back to the DOE. The DOE has a suitable diffractive structure so as to turn/split the rays in a predefined manner so as to spread the rays within the DOE.

The structure of the DOE 120 is configured to cause a difference in physical optical path lengths for light rays having propagated along the different routes 160A, 160B, which is longer than the coherence length, so that the rays sum incoherently at the second location, at least for some wavelength range. With conventional DOEs, the phase function is not controlled per se and the majority of the phase function along any path is due to manufacturing inaccuracies and is thereby uncontrollable. In particular, the phase functions thus induced cause phase function differences for equal geometrical optical path lengths that invalidate coherent summation, but do not have (approximate) slopes large enough to exceed that of the linear phase function corresponding to the coherence length.

In some embodiments, the same holds for more than two routes, i.e. additionally for example for third and fourth routes 180A, 180B which have the same geometrical optical path length, that, may be the same or different from that of the first and second routes 160A, 160B.

In some embodiments, and usually, there are several location pairs (corresponding to the pair 140/150) for which at least some of the abovementioned conditions hold. Thus, light rays can propagate from several first locations of the DOE to several second locations of the DOE along several different routes having the same route lengths. For at least some of said several different routes, the DOE is adapted to cause said difference in physical optical path lengths. In some embodiments, the DOE is adapted to cause said difference in the physical optical path lengths for all of the several different routes.

Fig. 2 shows schematically a single interaction of a ray with the DOE 122 at a specific location of the waveguide 100. At the dashed circle, the DOE microstructure (not shown detail) is such that a predefined significant phase shift occurs. Thus, the incoming ray has a different phase than the light ray having diffracted by the DOE. This effect is preferably arranged to take place on most or all locations of the DOE. The phase shift efficiency can be wavelength- and/or angle dependent.

To achieve a route-dependent phase shift, i.e. a shift which is generally different for different routes, the DOE comprises several different areas having different grating properties.

Fig. 3 illustrates an exemplary typical phase shift curve of a grating structure usable for the purposes of the invention. It can be seen that for at least some wave vector values, and therefore for at least some wavelengths, a large phase shift is caused. The slope describes an approximate of the phase shift between the dotted vertical lines denoting the wavenumber (wavelength) region of interest.

In some embodiments, the DOE comprises one or more leaky mode grating areas, which participate in the generation of the phase difference.

In some embodiments, the DOE comprises one or more resonant grating areas, which participate in the generation of the phase difference.

Detailed discussion of the type of gratings capable of causing the required phase shift can be found in Vartiainen I. et al, Depolarization of quasi-monochromatic light by thin resonant gratings, OPTICS LETTERS / Vol. 34, No. 11 / June 1, 2009.

In further embodiments, the DOE is adapted to essentially maintain the intensity of light when the light rays hit the DOE, irrespective of wavelength.

In practice, one can implement the present DOEs at least to feasible extent using conventional gratings having a period in the order of the visible spectrum, that is, less than 1 µm, typically less than 700 nm. The DOE may comprise several grating areas having different properties.

In some preferred embodiments, the period of the grating(s) is larger than the maximum visible wavelength in at least one, typically both dimensions thereof. In such grating, each period of the grating comprises a two-dimensional non-periodic microstructure pattern which repeats from period to period within a single grating area.

In this case, there is in the DOE at least one area comprising a grating which has a substantially larger period than the wavelength of visible light. In particular, the period is at least fivefold compared to the maximum visible light wavelength (700 nm) and typically 5 µm or more, for example 5 - 75 µm, and usually less than 1000 µm. Such gratings are still diffractive for incident light beams that are larger than the period, as the case typically is in display applications, but their diffraction is not limited to conventional few diffraction orders (+/-1 and 0). Such gratings give additional freedoms of design which can be used to implement the desired phase shift behavior all over the DOE.

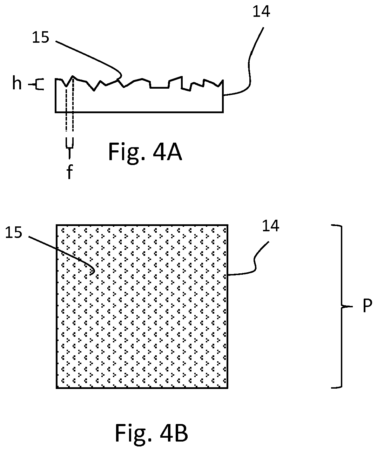

Fig. 4A and 4B show an exemplary unit element 14 having a lateral dimension corresponding to the large period P in cross-sectional side view and top view. The unit element has a surface profile 15, which is essentially non-periodic, in order not to decrease the effective period of the grating. The structure is composed of microfeatures, which have the average size f and maximum height of h. Herein, f is defined as the average distance from the bottom of a valley to the top of the neighboring peak.

The feature size f can be e.g. 10 - 700 nm and maximum height h e.g. 20 - 500 nm.

## Claims

1. A waveguide-based display element comprising:
- a light source capable of generating coherent light rays;
- a waveguide (100) capable of guiding the light rays in two dimensions via total internal reflections, and
- a diffractive optical element (DOE) (120) arranged on or within the waveguide, the DOE being adapted to allow propagation of the light rays inside the waveguide along said two dimensions so that the light rays can propagate at least from one first location of the DOE (140) to at least one second location of the DOE (150) along different routes (160A, 160B) having the same geometrical optical path length, and
**characterized in that** the DOE (120) is further adapted so that at least for one wavelength range the difference in physical optical path lengths, defined as the slope of linear approximation to the phase function as a function of the wavenumber at the wavelengths of the rays, for light rays having propagated along at least some of the said different routes (160A, 160B) is longer than the coherence length, so that the light rays sum incoherently at the second location (150).

2. The waveguide-based display element according to claim 1, wherein the light rays can propagate from several first locations (140) of the DOE (120) to several second locations (150) of the DOE along several different routes (160A, 160B) having the same geometrical optical path lengths, wherein for at least some of said several different routes, the DOE is adapted to cause said difference in physical optical path lengths.

3. The waveguide-based display element according to claim 2, wherein the DOE (120) is adapted to cause said difference in physical optical path lengths for all of said several different routes (160A, 160B).

4. The waveguide-based display element according to any of the preceding claims, wherein the DOE (120) is adapted, on at least some locations thereof, to cause for said wavelengths a significant phase change when the light rays hit the DOE.

5. The waveguide-based display element according to claim 4, wherein the DOE (120) is adapted, on most locations thereof, to cause for said wavelengths a significant phase change when the light rays hit the DOE.

6. The waveguide-based display element according to claim 4 or 5, wherein the DOE (120) is adapted to maintain the intensity of light when the light rays hit the DOE.

7. The waveguide-based display element according to any of the preceding claims, wherein the DOE (120) comprises a plurality of neighboring grating areas with different grating properties so as to cause said difference in the physical optical path lengths of the different routes.

8. The waveguide-based display element according to any of the preceding claims, wherein the DOE (120) comprises one or more leaky mode grating areas, which participate in the generation of the difference in the physical optical path lengths.

9. The waveguide-based display element according to any of the preceding claims, wherein the DOE (120) comprises one or more resonant grating areas, which participate in the generation of the difference in the physical optical path lengths.

10. The waveguide-based display element according to any of the preceding claims, wherein the period (14) of at least some portions of the DOE (120) is in the range of 5 µm or more.

11. The waveguide-based display element according to claim 10, wherein each period (14) of said portions of the DOE (120) comprise a non-periodic microstructure pattern (15) which repeats from period to period.

## Patentansprüche

1. Ein Anzeigeelement auf Wellenleiterbasis, bestehend aus:
- einer Lichtquelle, die in der Lage ist, kohärente Lichtstrahlen zu erzeugen;
- einem Wellenleiter (100), der in der Lage ist, die Lichtstrahlen in zwei Dimensionen über interne Totalreflexionen zu leiten und
- einem diffraktiven optischen Element (DOE) (120), das auf oder innerhalb des Wellenleiters angeordnet ist, wobei das DOE so ausgelegt ist, dass es die Ausbreitung der Lichtstrahlen innerhalb des Wellenleiters entlang der beiden Dimensionen ermöglicht, so dass sich die Lichtstrahlen mindestens von einer ersten Stelle des DOE (140) zu mindestens einer zweiten Stelle des DOE (150) entlang verschiedener Routen (160A, 160B) mit der gleichen geometrischen optischen Weglänge ausbreiten können, und
**dadurch gekennzeichnet, dass** das DOE (120) ferner so ausgelegt ist, dass die Differenz der physikalischen optischen Weglängen, zumindest für einen Wellenlängenbereich, definiert als die Steigung der linearen Annäherung an die Phasenfunktion, als Funktion der Wellenanzahl bei den Wellenlängen der Strahlen für Lichtstrahlen, die sich zumindest entlang einiger der genannten verschiedenen Routen (160A, 160B) ausgebreitet haben, länger als die Kohärenzlänge ist, so dass sich die Lichtstrahlen inkohärent an der zweiten Stelle (150) summieren.

2. Das Anzeigeelement auf Wellenleiterbasis gemäß Anspruch 1, worin sich die Lichtstrahlen von mehreren ersten Stellen (140) des DOE (120) zu mehreren zweiten Stellen (150) des DOE entlang mehrerer verschiedenen Routen (160A, 160B) mit denselben geometrischen optischen Weglängen ausbreiten können, wobei das DOE zumindest für einige der verschiedenen Routen angepasst ist, um die Differenz in den physikalischen optischen Weglängen zu bewirken.

3. Das Anzeigeelement auf Wellenleiterbasis gemäß Anspruch 2, worin das DOE (120) so ausgelegt ist, dass es die genannte Differenz in den physikalischen optischen Weglängen für alle der mehreren verschiedenen Routen (160A, 160B) bewirkt.

4. Das Anzeigeelement auf Wellenleiterbasis gemäß einem der vorhergehenden Ansprüche, worin das DOE (120) zumindest an einigen Stellen so ausgelegt ist, dass es für die genannten Wellenlängen eine signifikante Phasenänderung bewirkt, wenn die Lichtstrahlen auf das DOE treffen.

5. Das Anzeigeelement auf Wellenleiterbasis gemäß Anspruch 4, worin das DOE (120) an den meisten Stellen so ausgelegt ist, dass es für die genannten Wellenlängen eine signifikante Phasenänderung bewirkt, wenn die Lichtstrahlen auf das DOE treffen.

6. Das Anzeigeelement auf Wellenleiterbasis gemäß Anspruch 4 oder 5, worin das DOE (120) so ausgelegt ist, dass es die Intensität des Lichts aufrechterhält, wenn die Lichtstrahlen auf das DOE treffen.

7. Das Anzeigeelement auf Wellenleiterbasis gemäß einem der vorhergehenden Ansprüche, worin das DOE (120) eine Vielzahl benachbarter Gitterbereiche mit unterschiedlichen Gittereigenschaften aufweist, um die genannte Differenz in den physikalischen optischen Weglängen der verschiedenen Routen zu bewirken.

8. Das Anzeigeelement auf Wellenleiterbasis gemäß einem der vorhergehenden Ansprüche, worin das DOE (120) einen oder mehrere Gitterbereiche im Leckmodus umfasst, die an der Erzeugung der Differenz in den physikalischen optischen Weglängen beteiligt sind.

9. Das Anzeigeelement auf Wellenleiterbasis gemäß einem der vorhergehenden Ansprüche, worin das DOE (120) einen oder mehrere resonante Gitterbereiche umfasst, die an der Erzeugung der Differenz in den physikalischen optischen Weglängen beteiligt sind.

10. Das Anzeigeelement auf Wellenleiterbasis gemäß einem der vorhergehenden Ansprüche, worin die Periode (14) zumindest einiger Portionen des DOE (120) im Bereich von 5 pm oder mehr liegt.

11. Das Anzeigeelement auf Wellenleiterbasis gemäß Anspruch 10, worin jede Periode (14) der genannten Portionen des DOE (120) ein nicht-periodisches Mikrostrukturmuster (15) aufweist, das sich von Periode zu Periode wiederholt.

## Revendications

1. Un Élément d'affichage à base de guide d'ondes comprenant :
- une source lumineuse capable de générer des rayons lumineux cohérents ;
- un guide d'ondes (100) capable de guider les rayons lumineux en deux dimensions par l'intermédiaire de réflexions internes
totales, et
- un élément optique diffractif (DOE) (120) agencé sur ou à l'intérieur du guide d'ondes, le DOE étant adapté pour permettre une propagation des rayons lumineux à l'intérieur du guide d'ondes le long
desdites deux dimensions de sorte que les rayons lumineux puissent se propager au moins à partir d'un premier emplacement du DOE (140) jusqu'à au moins un second emplacement du DOE (150) le long de différents itinéraires (160A, 160B) ayant la même longueur de trajet optique géométrique, et
**caractérisé en ce que** le DOE (120) est en outre adapté de sorte qu'au moins pour une plage de longueurs d'onde, la différence de longueurs de trajet optique physique, définie comme la pente d'approximation linéaire de la fonction de phase en fonction du nombre d'ondes aux longueurs d'onde des rayons, pour les rayons lumineux s'étant propagés le long d'au moins certains desdits différents itinéraires (160A, 160B) soit plus longue que la longueur de cohérence, de sorte que les rayons lumineux s'additionnent de manière incohérente au deuxième emplacement (150).

2. L'élément d'affichage à base de guide d'ondes selon la revendication 1, dans lequel les rayons lumineux peuvent se propager à partir de plusieurs premiers emplacements (140) du DOE (120) jusqu'à plusieurs deuxièmes emplacements (150) du DOE le long de plusieurs itinéraires différents (160A, 160B) ayant les mêmes longueurs de trajet optique géométrique, dans lequel pour au moins certains desdits différents itinéraires, le DOE est adapté pour provoquer ladite différence dans les longueurs de trajet optique physique.

3. L'élément d'affichage à base de guide d'ondes selon la revendication 2, dans lequel le DOE (120) est adapté pour
provoquer ladite différence dans des longueurs de trajet optique physique pour tous lesdits différents itinéraires (160A, 160B).

4. L'élément d'affichage à base de guide d'ondes selon l'une quelconque des revendications précédentes, dans lequel le DOE (120) est adapté, sur au moins certains de ses emplacements, pour provoquer pour lesdites longueurs d'onde un changement de phase significatif lorsque les rayons lumineux frappent le DOE.

5. L'élément d'affichage à base de guide d'ondes selon la revendication 4, dans lequel le DOE (120) est adapté, sur
la plupart de ses emplacements, pour provoquer pour lesdites longueurs d'onde un changement de phase significatif lorsque les rayons lumineux frappent le DOE.

6. L'élément d'affichage à base de guide d'ondes selon la revendication 4 ou 5, dans lequel le DOE (120) est adapté pour maintenir l'intensité de lumière lorsque les rayons lumineux frappent le DOE.

7. L'élément d'affichage à base de guide d'ondes selon l'une quelconque des revendications précédentes, dans lequel le DOE (120) comprend une pluralité de zones de réseau voisines ayant des propriétés de réseau différentes de manière à provoquer ladite différence dans les longueurs de trajet optique physique des différents itinéraires.

8. L'élément d'affichage à base de guide d'ondes selon l'une quelconque des revendications précédentes, dans lequel le DOE (120) comprend une ou plusieurs zones de réseau à mode de fuite, qui participent à la génération de la différence dans les longueurs de trajet optique physique.

9. L'élément d'affichage à base de guide d'ondes selon l'une quelconque des revendications précédentes, dans lequel le DOE (120) comprend une ou plusieurs zones de réseau résonnant, qui participent à la génération de la différence dans les longueurs de trajet optique physique.

10. L'élément d'affichage à base de guide d'ondes selon l'une quelconque des revendications précédentes, dans lequel la période (14) d'au moins certaines parties du DOE (120) est dans la plage de 5 pm ou plus.

11. L'élément d'affichage à base de guide d'ondes selon la revendication 10, dans lequel chaque période (14) desdites parties du DOE (120) comprend un motif de microstructure non périodique (15) qui se répète de période en période.
